# EUROPÄISCHE PATENTSCHRIFT

(11) **EP 2 064 608 B1**
(45) Veröffentlichungstag und Bekanntmachung des Hinweises auf die Patenterteilung: **16.08.2017**
(21) Anmeldenummer: 07801770.4
(22) Anmeldetag: 20.08.2007
(51) Int. Cl.: F24D 19/10, F24D 3/12, G05D 23/02

(54) **THERMOSTATISCHES VENTIL ZUR REGELUNG EINES MASSENSTROMES**
THERMOSTATIC VALVE FOR REGULATING A MASS FLOW
SOUPAPE THERMOSTATIQUE POUR LA RÉGULATION D'UN FLUX MASSIQUE

(30) Priorität: 04.09.2006 DE 102006041833; 03.11.2006 DE 102006052296
(43) Veröffentlichungstag der Anmeldung: 03.06.2009
(73) Patentinhaber: Otto Egelhof GmbH & Co. KG, 70736 Fellbach (DE)
(72) Erfinder: SOHN, Jürgen, 73732 Esslingen (DE)
(74) Vertreter: Maser, Jochen
(86) Internationale Anmeldenummer: PCT/EP2007/007330
(87) Internationale Veröffentlichungsnummer: WO 2008/028559

(56) Entgegenhaltungen:
- EP-A- 0 735 450
- EP-A- 1 302 711
- DE-U1- 20 114 702
- GB-A- 2 274 500
- US-A- 5 984 195

## Beschreibung

Die Erfindung betrifft ein thermostatisches Ventil zur Regelung eines Massenstromes in Abhängigkeit der Temperatur des Massenstromes gemäß dem Oberbegriff des Anspruchs 1.

Aus der DE 298 05 473 U1 geht ein thermostatisches Ventil zur Regelung eines Massenstroms als Rücklauftemperaturbegrenzungsventil hervor, welches an einem Gehäuse eine Einlass- und eine Auslassöffnung für einen zu regelnden Massenstrom umfasst. Der Einlassöffnung ist eine Durchtrittsöffnung in eine Kammer zugeordnet, an der ein Ventilsitz ausgebildet ist, so dass die Durchlassöffnung durch ein in dem Ventilsitz angeordnetes Ventilelement verschließbar ist. In der Kammer des Gehäuses ist eine Feder angeordnet, die in Strömungsrichtung des Massenstromes wirkt. Das Ventilelement wird durch einen Dehnstoffkörper angesteuert. Hierbei handelt es sich um sogenannte Wachsdehnelemente, welche Paraffin enthalten. Ab einer bestimmten Temperatur ändert sich der Aggregatzustand des Paraffins von fest in flüssig, wodurch eine Stellbewegung auf das Ventilelement ausgeübt wird. Dadurch wird das Rücklauftemperaturbegrenzungsventil geschlossen, sobald der Massestrom eine vorbestimmte Temperatur übersteigt.

Solche Rücklauftemperaturbegrenzungsventile werden bevorzugt in Heizungsanlagen eingesetzt, bei denen sowohl eine Fußbodenheizung als auch ein Radiatorheizkörper durch einen gemeinsamen Vor- und Rücklauf versorgt werden. Durch die Rücklauftemperaturbegrenzer soll erzielt werden, dass die Fußbodenheizung nicht mit einer überhöhten Vorlauftemperatur durchströmt wird. Des Weiteren soll dadurch sichergestellt werden, dass eine maximal zulässige Estrichtemperatur nicht überschritten wird.

Ein solches Rücklauftemperaturbegrenzungsventil mit einem Dehnstoffkörper beziehungsweise Wachsdehnelement weist den Nachteil auf, dass solche Dehnelemente in ihrer Reaktionszeit träge sind. Darüber hinaus ist ein erhöhter Bauraum erforderlich, um solche Wachsdehnelemente in einem Gehäuse für ein Rücklauftemperaturbegrenzungsventil einzubauen.

Aus der GB 2 274 500 A ist eine Handbrause bekannt, welche im Handgriff ein thermostatisches Abschaltventil umfasst, welches beim Überschreiten einer vorbestimmten Temperatur eine Durchflussöffnung schließt.

Aus der US 5,984,195 geht ein thermostatischer Regler zur Mischung von Warm- und Kaltwasser hervor, der einem Abschaltventil vorgeschalten ist.

Der Erfindung liegt deshalb die Aufgabe zugrunde, ein thermostatisches Ventil zu schaffen, bei welchem die Reaktionszeit einstellbar und optimiert ist, also verkürzt wird und eine einfache und kompakte Bauweise eines Ventils ermöglicht ist.

Diese Aufgabe wird erfindungsgemäß durch ein thermostatisches Ventil gemäß den Merkmalen des Anspruchs 1 gelöst. Durch die Anordnung eines thermischen Stellgliedes aus einer Formgedächtnislegierung in einem thermostatischen Ventil wird ermöglicht, dass ab einem vorbestimmbaren Temperaturwert eine Stellbewegung des Ventilelements erzielt wird. Da bei solchen Formgedächtnislegierungen keine Aggregatzustandsänderung erfolgt, ist eine schnelle Reaktionszeit gegeben, um eine Stellbewegung zu bewirken. Formgedächtnisiegierungen sind Materialien, die nach einem geeigneten Wärmeeintrag wieder zu ihrer ursprünglichen Form und Größe zurückkehren. Darüber hinaus weist das thermische Stellglied aus einer Formgedächtnislegierung den Vorteil auf, dass hohe Schließkräfte bewirkt werden können, so dass ab einem vorbestimmbaren Temperaturwert das thermische Stellglied eine Rückstellkraft eines Kraftspeicherelementes überwindet, welches das Ventilelement in einer Ausgangsposition anordnet, sofern ein bestimmter Temperaturwert nicht erreicht ist und das thermische Stellglied inaktiv ist. Das thermische Stellglied aus einer Formgedächtnislegierung ermöglicht darüber hinaus eine platzsparende Anordnung, da ein zusätzliches Gehäuse für ein solches Stellglied aus einer Formgedächtnislegierung nicht erforderlich ist. Das Ventilelement, das zumindest eine Kraftspeicherelement und das zumindest eine thermische Stellglied sind in der Kammer des Gehäuses vorgesehen, wobei die Kammer in einer Schließposition des Ventilelementes mit der Einlassöffnung oder der Auslassöffnung in Verbindung steht. Dadurch wird ermöglicht, dass das thermische Stellglied entweder die Temperatur des Massenstromes eingangsseitig oder ausgangsseitig erfasst und in Abhängigkeit hiervon eine Ansteuerung des Ventilelementes vornimmt. Das thermostatische Ventils weist an einem Endabschnitt der Kammer einen Stellantrieb auf, durch den ein stirnseitiger Wandabschnitt der Kammer gebildet und das Kammervolumen veränderbar ist. Ein solcher Stellantrieb ermöglicht eine zusätzliche Einstellung eines Temperaturwertes, bei welchem das thermische Stellglied anspricht und auf das Ventilelement eine Stellbewegung ausübt. Zusätzlich ist ein einfacher Zusammenbau des thermostatischen Ventils gegeben. Solche thermostatische Ventile können beispielsweise als Vor- oder Rücklauftemperaturbegrenzungsventile ausgebildet sein und eingesetzt werden.

Nach einer bevorzugten Ausgestaltung der Erfindung ist vorgesehen, dass das thermische Stellglied als Federelement ausgebildet ist. Dies stellt eine einfache und kostengünstige Ausgestaltung des Stellgliedes dar. Darüber hinaus weist diese Ausführungsform den Vorteil auf, dass ein solches thermisches Stellglied vollständig durch den Massenstrom umströmbar ist, so dass ab einem vorbestimmten Temperaturwert das gesamte thermische Stellglied vollständig aktiviert wird und eine Stellkraft, beziehungsweise eine Stellbewegung auf das Ventilelement wirkt. Alternativ kann vorgesehen sein, dass das thermische Stellglied als membranartiges Element ausgebildet ist, welches ebenfalls in Abhängigkeit der Temperatur des Massenstromes eine Hubbewegung beziehungsweise eine Stellbewegung auf das Ventilelement ausübt.

Nach einer vorteilhaften Ausgestaltung der Erfindung ist vorgesehen, dass das thermische Stellglied auf einen Temperaturwert einstellbar ist, ab dem eine Stellbewegung auf das Ventilelement wirkt. Dadurch kann in Abhängigkeit der Anwendungen ein erster Temperaturbereich zur Aktivierung des thermischen Stellgliedes eingestellt werden, so dass solche thermostatischen Ventile für verschiedene Temperaturen in Massenströmen einsetzbar sind.

Zur kompakten Bauweise des thermostatischen Ventils ist bevorzugt vorgesehen, dass das in der Kammer angeordnete Ventilelement zumindest eine Angriffsfläche für das zumindest eine Kraftspeicherelement und eine weitere Angriffsfläche für das zumindest eine thermische Stellglied aufweist, wobei die Angriffsflächen einander gegenüber liegend am Ventilelement vorgesehen sind. Dadurch können das Kraftspeicherelement als auch das thermische Stellglied beide als Druckelemente ausgelegt werden, die gegeneinander wirken, so dass eine spielfreie Anordnung und eine eindeutige Überlagerung der Kräfte, beziehungsweise die Erzielung einer Kraftresultierenden zum Öffnen und Schließen des Ventilelementes ermöglicht ist.

Nach einer bevorzugten Ausgestaltung der Erfindung ist vorgesehen, dass das thermische Stellglied in einem Kammerabschnitt der Kammer vorgesehen ist, der in einer Schließstellung des Ventilelementes mit dem der Einlassöffnung zugeführten Massenstrom beaufschlagt ist. Eine solche Ausgestaltung ermöglicht beispielsweise einen Einsatz als Rücklauftemperaturbegrenzungsventil für eine Fußbodenheizung. Das Ventil erfasst die Rücklauftemperatur der Fußbodenheizung, bevor diese in das gesamte Rücklaufsystem eingespeist wird. Sobald die Temperatur des Massenstroms oberhalb eines vorbestimmten Grenzwertes liegt, erfolgt über das thermische Stellglied eine Schließbewegung und der Rücklauf wird geschlossen. Dadurch strömt kein aufgeheizter Massenstrom nach und es erfolgt eine Abkühlung. Diese Temperaturreduzierung wird unmittelbar durch das thermische Stellglied erfasst, Dadurch nimmt die Stellkraft des thermischen Stellgliedes ab und die Rückstellkraft des Kraftspeicherelementes überwiegt, so dass das Ventilelement die Durchlassöffnung freigibt.

Nach einer alternativen Ausgestaltung des thermostatischen Ventils ist vorgesehen, dass das thermische Stellglied in einem Kammerabschnitt der Kammer vorgesehen ist, der in einer Schließstellung des Ventilelementes mit dem an einer Auslassöffnung anliegenden Massenstromes beaufschlagt ist. Bei dieser Anordnung ist ermöglicht, dass im Beispielsfalle ein kombinierten Radiator-Fußbodenheizung das thermostatische Ventil mit der Temperatur des gesamten Rücklaufmassenstromes beaufschlagt ist und in Abhängigkeit dieser Temperatur die Fußbodenheizung regelt. Die beiden vorgenannten Ausführungsformen sind nur beispielhaft zum besseren Verständnis anhand der Verwendung als Rück auftemperaturbegrenzungsventil beschrieben und darauf nicht beschränkt.

Eine weitere alternative Ausführungsform der Erfindung sieht vor, dass das thermische Stellglied in einem Kammerabschnitt der Kammer angeordnet ist, welcher durch das Ventilelement von dem weiteren mit Massenstrom durchströmbaren Kammerabschnitt getrennt ist und dass das thermische Stellglied mit einer Umgebungstemperatur oder einem weiteren Massenstrom ansteuerbar ist. Dadurch kann beispielsweise ein Thermostatventil ausgebildet sein, welches in Abhängigkeit der Umgebungstemperatur angesteuert ist. Es kann beispielsweise für eine Frostschutzfunktion oder für eine Überhitzungsfunktion in einem Raum eingesetzt werden. Des Weiteren kann das thermische Stellglied einem separaten Massenstrom zugeordnet werden, der als Steuermedium vorgesehen ist.

Das thermostatische Ventil weist gemäß einer ersten bevorzugten Ausgestaltung ein Sitzventil auf. Dafür ist vorgesehen, dass der Ventilsitz an einer Durchlassöffnung zwischen der Einlaßöffnung und der Auslassöffnung angeordnet ist und mit einem kugel-, oder kegelförmigen oder tellerförmigen Ventilelement schließbar ist.

Das Sitzventil weist bevorzugt einen Führungsabschnitt auf, der an einer als Führung ausgebildeten Kammerwand verschiebbar angreift. Dadurch kann das Ventilelement verkippungsfrei innerhalb der Kammer positioniert werden. Vorzugsweise sind im Bereich der Führungsabschnitte Strömungskanäle oder Strömungsnuten vorgesehen, damit ein ungehindertes Durchströmen des Massenstromes von der Einlassöffnung zur Auslassöffnung ermöglicht ist.

Eine alternative Ausgestaltung des thermostatischen Ventils sieht vor, dass das Ventilelement als Schieberventil ausgebildet ist. Bei dieser alternativen Ausführungsform kann in die Kammer eine Hülse eingesetzt werden, welche ein Schiebeventil aufnimmt und relativ zu einer Öffnung bzw. Durchlassöffnung der Hülse verschiebbar angeordnet ist. Ohne Hülse kann das Ventilelement direkt an der Kammerinnenwand anliegen.

Bei dem Einsatz eines Schiebeventils ist bevorzugt vorgesehen, dass die schlitzförmige Öffnung der Hülse einer Einlaßöffnung oder Auslassöffnung zugeordnet ist. Dadurch können einfache geometrische Verhältnisse geschaffen werden, die Hülse kann unmittelbar an einer Kammerinnenwand anliegen und die Öffnung dem Eingang oder Ausgang zugeordnet werden.

Das Schiebeventil weist bevorzugt eine radial verlaufende Mantelfläche als Ventilschließfläche auf, die die zumindest eine Öffnung in der Einlassöffnung oder in der Hülse In einer Schließposition vollständig überdeckt. Die Ventilschließfläche ist gleichzeitig auch eine Führungsfläche für das Ventilelement in der Hülse. Alternativ zur schlitzförmigen Öffnung in der Hülse kann auch eine Reihe von radial umlaufenden Bohrungen vorgesehen sein, welche eine Durchlassöffnung bilden.

Nach einer weiteren vorteilhaften Ausgestaltung der Erfindung ist vorgesehen, dass das Ventilelement und das thermische Stellglied als eine Baueinheit oder ein Bauteil ausgebildet sind. Diese Ausgestaltung weist den Vorteil auf, dass eine höhere integritat von einzelnen Bauteilen gegeben ist. Bevorzugt können das thermische Stellglied und das Ventilelement aus einem Bauteil bestehen und in der Gesamtheit in die Kammer eingesetzt werden.

Das an dem Ventilelement angreifende, zumindest eine Kraftspeicherelement ist bevorzugt als Federelement ausgebildet. Solche Federelemente weisen den Vorteil auf, dass diese kostengünstig sind und einen geringen Strömungswiderstand aufweisen und auf den Anwendungsfall einfach und spezifisch anpassbar sind.

Nach einer weiteren vorteilhaften Ausgestaltung der Erfindung ist vorgesehen, dass das Kraftspeicherelement durch einen zwischen dem Ventilelement und einem Wandabschnitt oder stirnseitigen Kammerwand der Kammer wirkenden Vorspanneinrichtung vorgespannt ist. Dadurch kann ein vordefinierter Stellweg des Ventifelementes in eine Ausgangsposition nach dem Beaufschlagen durch das thermische Stellglied bestimmt werden. Gleichzeitig kann dadurch eine Mindestkraft vorgesehen sein, die zur Ansteuerung des Ventilelementes voreingestellt ist.

Bevorzugt ist vorgesehen, dass die Kammer an einem Endabschnitt einen Verschluss aufweist. Durch den stirnseitig vorgesehenen Verschluss an der Kammer ist ermöglicht, dass ein einfaches Bestücken des Gehäuses durch die einzelnen Komponenten ermöglicht ist. Durch die Ausgestaltung des Verschlusses als Wandabschnitt oder zur Aufnahme einer Spannplatte kann die Vorspanneinrichtung daran integriert werden.

Bevorzugt ist vorgesehen, dass der Verschluss einen stirnseitigen Wandabschnitt der Kammer bildet, an welchem sich das thermische Stellglied oder das Kraftspeicherelement abstützt. Alternativ kann vorgesehen sein, dass eine Spannplatte der Vorspanneinrichtung an dem Verschluss anliegt oder daran angreift.

Des Weiteren ist bevorzugt vorgesehen, dass die Vorspanneinrichtung als Bügel ausgebildet ist, die an einem Ende an dem Ventilelement angreift und am gegenüberliegenden Ende relativ verschiebbar an dem Wandabschnitt der Kammer oder der Spannplatte angreift. Dadurch kann ein konstruktiv einfacher Aufbau vorgesehen sein, um die Vorspanneinrichtung auszuführen. Des Weiteren ist eine leichte Montage ermöglicht. Alternativ kann die Vorspanneinrichtung als Hubbegrenzung für das Ventilelement in einer auf das thermische Stellglied zugerichteten Hubbewegung dienen. Dadurch bleibt der für das thermische Stellglied vorgesehene Raum gleich und eine Veränderung einer Kennlinie des thermischen Stellglieds wird unterbunden.

Das thermostatische Ventil weist bevorzugt eine Einstellschraube als Verschluss auf, durch den eine Öffnungs- oder Schließtemperatur für den Massenstrom einstellbar ist. Durch diese Einstellschraube wird die Position des Ventilelementes zum Ventilsitz eingestellt, wodurch eine Justierung auf einen bestimmten Temperaturwert ermöglicht ist.

Bevorzugt ist vorgesehen, dass durch die Änderung des Kammervolumens über den Stellantrieb eine Vorspannkraft des zumindest einen thermischen Stellgliedes oder des zumindest einen Kraftspeicherelementes veränderbar ist. Somit kann eine Einstellung des Stellgliedes auf vorbestimmte Temperaturwerte vorgewählt werden. Beispielsweise wird ermöglicht, dass ein solches thermostatisches Ventil zusätzlich über eine Raumtemperatur regelbar ist. Eine solche von der Raumtemperatur abgeleitete Regelgröße wird einer Regelgröße überlagert, welche das thermische Stellglied aus dem aktuell vorherrschenden Massenstrom entnimmt. Ein Anwendungsbeispiel hierfür ist, dass eine Fußbodenheizung nur über die Raumtemperatur gesteuert wird.

Der Stellantrieb ist bevorzugt als elektrothermischer Stellantrieb mit beispielsweise einem Wachsdehnelement oder einem Stellglied aus einer Formgedächtnislegierung ausgebildet. Alternativ kann auch ein Ferntemperaturfühler eingesetzt werden, der entfernt zum thermostatischen Ventil vorgesehen ist und den dort vorhandenen Temperaturwert ermittelt. Über ein Kapillarrohr wird die erfasste Temperatur an ein Stellelement des Stellantriebes weitergeleitet, welches der Kammer des thermostatischen Ventils zugeordnet ist. Des Weiteren kann alternativ ein Thermostatventil vorgesehen sein, welches manuell oder elektrisch auf verschiedene Sollwerte einstellbar ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittdarstellung eines thermostatischen Ventils,
- Figur 2: eine schematische Schnittdarstellung einer Ausführungsform zu Figur 1,
- Figur 3: eine schematische Schnittdarstellung einer weiteren alternativen Ausführungsform zu Figur 1,
- Figur 4: eine schematische Schnittdarstellung einer weiteren alternativen Ausführungsform,
- Figur 5: eine schematische Schnittdarstellung einer weiteren erfindungsgemäßen Ausführungsform mit einem thermischen Fernverstellantrieb und
- Figur 6: eine schematische Schnittdarstellung einer weiteren erfindungsgemäßen Ausführungsform mit einem elektrothermischen Stellantrieb.

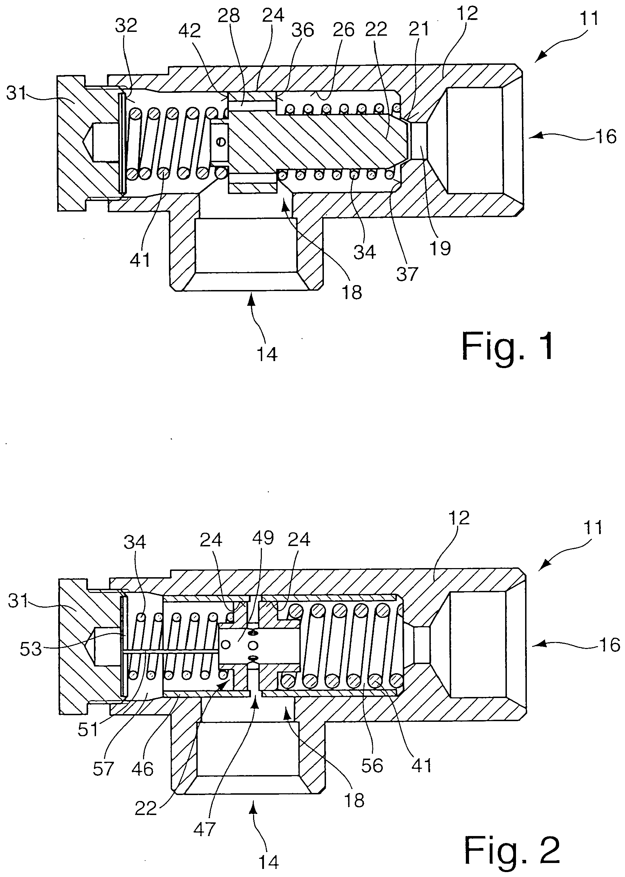

In Figur 1 ist eine schematische Schnittdarstellung eines thermostatschen Ventils 11 dargestellt. Dieses Ventil 11 umfasst ein Gehäuse 12 mit einer Einlassöffnung 14 und einer Auslassöffnung 16. Anwendungsspezifisch können die Ein- und Auslassöffnung 14, 16 auch gegenseitig vertauscht sein. In dem Gehäuse 12 ist eine Kammer 18 ausgebildet, welche über eine Durchlassöffnung 19 mit der Auslassöffnung 16 in Verbindung steht. Die Durchlassöffnung 19 weist einen Ventilsitz 21 auf, der durch ein Ventilelement 22 verschließbar ist. Das Ventilelement 22 erstreckt sich in die Kammer 18 und weist einen Führungsabschnitt 24 auf, der an einer Kammerinnenwand 26 der Kammer 18 längsverschieblich geführt ist. An dem Führungsabschnitt 24 sind Strömungskanäle 28 oder Strömungsnuten vorgesehen, die axial verlaufend ausgebildet sind, damit in Abhängigkeit einer Hubstellung des Ventilselementes 22 ein Massenstrom von der Einlassöffnung 14 zur Auslassöffnung 16 gelangen kann. Der Führungsabschnitt 24 ist hinreichend breit ausgebildet, um eine verkippungsfreie Aufnahme des Ventilelementes 24 sicher zu stellen.

An einem der Auslassöffnung 16 gegenüberliegenden Endabschnitt der Kammer 18 ist ein Verschluss 31 vorgesehen. Dieser Verschluss ist bevorzugt als Einstellschraube ausgebildet, so dass eine axiale Verstellung des Verschlusses 31 und somit des Ventilelementes 22 relativ zur Kammer 18 ermöglicht ist. Dieser Verschluss 31 umfasst einen stirnseitigen Wandabschnitt 32, der die Kammer 18 schließt.

Zur Steuerung des Ventilelementes 22 ist ein Kraftspeicherelement 34 vorgesehen, welches einen Teil des Ventilelementes 22 umgibt und an einer ersten Angriffsfläche 36 am Ventilelement 22 angreift. Diese Angriffsfläche 36 liegt einer stirnseitigen Kammerwand 37 gegenüber, welche die Durchlassöffnung 19 umgibt. Das Kraftspeicherelement 34 ist bspw. als Rückstellfeder ausgebildet und ermöglicht, dass das Ventilelement 22 aus einer Schließposition im Ventilsitz 21 in Öffnungsrichtung bewegt wird. Der Öffnungsrichtung des Ventilelementes 22 entgegengesetzt wirkend ist ein thermisches Stellglied 41 vorgesehen, welches an einer der ersten Angriffsfläche 36 gegenüberliegenden zweiten Angriffsfläche 42 am Ventilelement 22 angreift. Die erste und zweite Angriffsfläche 36 und 42 sind bevorzugt Wandabschnitte, die an den Führungsabschnitt 24 angrenzen.

Das thermische Stellglied 41 ist aus einer Formgedächtnislegierung hergestellt und bevorzugt als Spiralfeder ausgebildet. Weitere geometrische Anordnungen und Ausgestaltungen sind ebenfalls möglich die bewirken, dass das thermische Stellglied 41 ab einem bestimmbaren Temperaturwert eine Hubbewegung durchführt, welche der Kraft des zumindest einem ersten Kraftspeicherelementes 34 entgegenwirkt und das Ventilschließglied in eine Schließposition überführt. Solche Formgedächtnislegierungen (auch SMA (Shape Memory Alloy) genannt) bestehen beispielsweise aus einer TiNi-Legierung, aus einer Legierung auf Cu-Basis, Fe-Basis oder aus einem Memorie-Kunststoff.

Die in der Figur 1 dargestellte Anordnung ermöglicht somit, dass eine Temperatur eines Massenstromes überwacht wird, wobei bei Übersteigen einer vorbestimmten Temperatur das thermische Stellglied 41 eine Schließbewegung des Ventilelementes 22 bewirkt. Das Ventilelement 22 kann alternativ auch der Gestalt ausgebildet sein, dass beim Aktivieren des thermischen Stellgliedes 41 die Durchlassoffnung frei gegeben wird. In einem solchen Fall würde in einer Ausgangsposition das Ventilelement ein Ventilsitz schießen. Dabei wäre der Ventilsitz der Auslassöffnung zugeordnet und das Ventilelement über einen die Durchlassöffnung durchdringenden Schaft dem außenliegenden Ventilsitz zugeordnet.

Durch die Auswahl der Drahtstärke des als Federelement ausgebildeten thermischen Stellgliedes 41, deren Steigung als auch deren Legierung wird die Hubkraft sowie die Aktivierungstemperatur ausgewählt, um das thermische Stellglied 41 auf den Anwendungsfall abzustimmen. Durch die Einstellung des Verschlusses 31 wird eine Feineinstellung des Öffnungs- bzw. Schließzeitpunktes des Ventilelementes 22 vorgenommen.

Bei der in Figur 1 dargestellten Ausführungsform ist ebenfalls ermöglicht, dass die Anordnung des thermischen Stellgliedes 41 und des Kraftspeicherelementes 34 vertauscht ist. Die Zuordnung der Einlassöffnung 14 und Auslassöffnung 16 kann ebenfalls vertauscht sein.

Das thermische Stellglied 41 erfasst die Temperatur des Massenstromes, welcher in der Kammer 18 anliegt. Sobald das Ventilelement 22 in einer Schließposition des Ventilsitzes 21 ist, kühlt die Temperatur des in der Kammer 18 sich befindenden Massenstromes wieder ab, wodurch die Kraft der Rückstellfeder größer wird als die Druckkraft des thermischen Stellgliedes 41, so dass eine Öffnungsbewegung des Ventilelementes 22 erzielt wird. Sobald die Temperatur des durchströmenden Massenstromes wieder ansteigt, reagiert unmittelbar darauf das thermische Stellglied 41 und schließt die Durchlassöffnung 19.

In Figur 2 ist eine schematische Schnittdarstellung einer Ausführungsform zu dem in Figur 1 mit einem Sitzventil ausgebildeten thermostatischen Ventil 11 dargestellt. Hierbei handelt es sich um ein thermostatisches Ventil 11 mit einem sogenannten Schieberventil. Das Ventilelement 22 ist als Schieber ausgebildet, welches in einer in die Kammer 18 eingesetzten Hülse 46 verschiebbar angeordnet ist. Die Hülse 46 weist eine Öffnung 47 auf, die geschlitzt oder durch eine oder mehrere Bohrungen oder Langlochbohrungen ausgebildet sein kann und der Durchlassöffnung 19 gemäß Figur 1 entspricht. Im dargestellten Ausführungsbeispiel ist der Führungsabschnitt 24 des Ventilelementes 22 zweigeteilt, wobei ein Abstand der beiden Führungsflächen 24 im Wesentlichen der Größe der Öffnung 47 entspricht. Dadurch kann ein Massenstrom durch die Öffnung 47 in einen rohrförmigen Abschnitt 49 des Ventilelementes 22 und anschließend in die Kammer 18 gelangen. Durch eine Schiebebewegung nach rechts oder links kann der jeweilige zum Einsatz kommende Führungsabschnitt 24 die Öffnung 47 der Hülse 46 verschließen. In einem ersten bevorzugten Ausführungsbeispiel ist das thermische Stellglied 41 in einem Kammerabschnitt 56 zwischen der Einlassöffnung 14 und der Auslassöffnung 16 vorgesehen und das Kraftspeicherelement 34 in einem Kammerabschnitt 57 zwischen der Einlassöffnung 14 und dem Verschluss 31 angeordnet. Diese Anordnung kann auch vertauscht vorgesehen sein, ebenso die Zuordnung der Einlassöffnung 14 und Auslassöffnung 16.

Eine alternative, nicht näher dargestellte Ausführungsform gemäß Figur 2 sieht vor, dass unmittelbar an der Kammerinnenwand 26 der Kammer 28 das Ventilelement 22 angreift. Eine Einlassöffnung 14 ist dabei derart ausgestaltet, dass die Bohrung für die Einlaßöffnung 14 in eine Öffnung 47 übergeht, die schlitzförmig ausgebildet ist oder eine oder mehrere nebeneinander angeordnete Bohrungen oder Langlochbohrungen über den Bereich der Einlassöffnung 14 aufweist. Dadurch kann die Hülse 46 als zusätzliches Bauteil entfallen. Dabei ist die gleiche Funktion gegeben.

Bei dieser Ausführungsform ist das Kraftspeicherelement 34 durch eine Vorspanneinrichtung 51 vorgespannt. Diese Vorspanneinrichtung 51 ist bspw. als Bügel ausgebildet, der eine V-förmige Kontur umfasst. Die beiden freien Enden der V-förmigen Schenkel greifen an dem Ventilelement 22 an, wohingegen das geschlossene Ende der V-förmigen Schenkel am Verschluss 31, insbesondere an einer Spannplatte 53 vorgesehen ist. Diese Spannplatte 53 wird in eine Aufnahme des Verschlusses 31 eingesetzt. Die Spannplatte 53 umfasst zwei Bohrungen, durch welche die beiden Schenkel des V-förmigen Bügels hindurchgeführt sind. Bei einer Verschiebung des Ventilelementes 22 in Richtung auf den Verschluss 31 können somit die V-förmigen Schenkel relativ zur Spannplatte 53 in die Sacklochbohrung 54 im Verschluss 31, eintauchen. Alternativ kann die Vorspanneinrichtung 51 als Käfig ausgebildet sein, um das Kraftspeicherelement 34 vorzuspannen. Des Weiteren kann alternativ eine Spindel mit daran angeordneten Halteabschnitten vorgesehen sein, welche auf einer Seite an dem Ventilelement 22 und gegenüberliegend an dem Kraftspeicherelement 34 angreifen. Darüber hinaus kann die Vorspanneinrichtung 51 Anschläge oder Vorsprünge umfassen, welche die Verschiebebewegung des Ventilelements 22 begrenzen und in dem Kammerabschnitt 56 nach innenragend ausgebildet sind. Dadurch kann ein auf Block fahren des thermischen Stellglieds 41 verhindert werden.

Des Weiteren kann alternativ vorgesehen sein, dass anstelle eines spiralfederförmig ausgebildeten thermischen Stellglied 41 ein membranförmig ausgebildetes Stellglied 41 vorgesehen ist, welches an einem Wandabschnitt 32 oder einem Verschluss 31 befestigt ist und eine Stellbewegung auf das Ventilelement 22 ausübt. Ein solches membranartiges Ventilelement kann ebenfalls Durchgangsbohrungen aufweisen, damit das die Kammer 18 durchströmende Medium das membranartig ausgebildete thermische Stellglied 41 sowohl an der Innen- als auch Außenseite thermisch ansteuern kann.

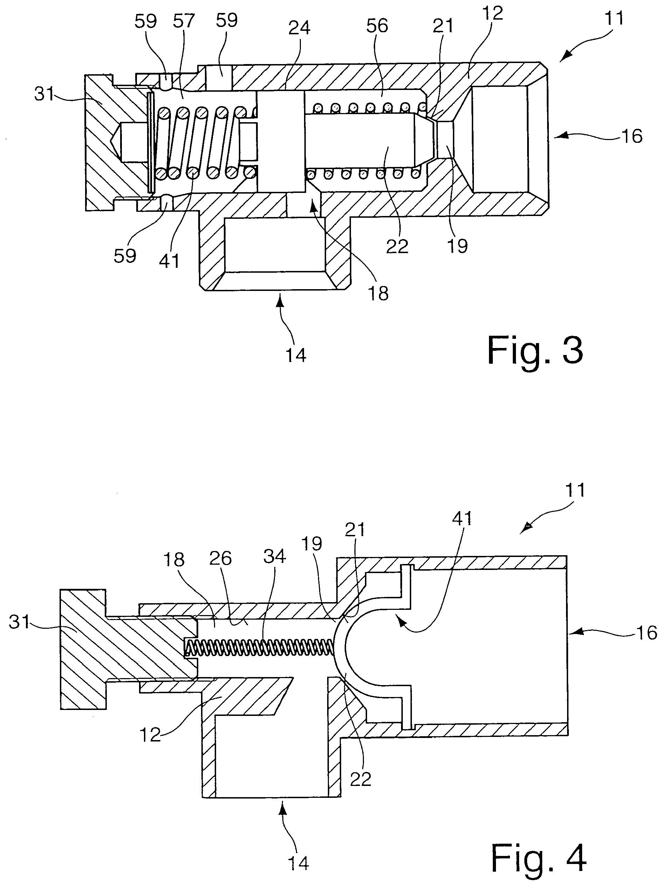

In Figur 3 ist eine schematische Schnittdarstellung einer weiteren alternativen Ausführungsform dargestellt. Diese Ausführungsform unterscheidet sich im Wesentlichen zur Ausführungsform gemäß Figur 1 darin, dass ein Kammerabschnitt 57 der Kammer 18 durch einen Führungsabschnitt 24 des Ventilelementes 22 gegenüber dem weiteren Kammerabschnitt 56 der Kammer 18 getrennt ist, so dass kein Massenstrom des zu regelnden Kreislaufes in den Kammerabschnitt 57 gelangt. Der Kammerabschnitt 57 ist mit Öffnungen 59 ausgebildet, wodurch das thermische Stellglied 41 über eine Umgebungstemperatur ansteuerbar ist. Einen den Kammerabschnitt 57 bildenden Gehäuseabschnitt sowie ein ggf. daran angeordneter Handgriff zur Temperatureinstellung und des sich darin befindlichen thermischen Stellglied 41 bilden einen Thermostateinsatz, der austauschbar an dem Gehäuse 12 des thermostatischen Ventils 11 vorgesehen sein kann. Dieses thermostatische Ventil 11 ermöglicht die Regelung eines Massenstromes anhand der Umgebungstemperatur.

Nach einer weiteren nicht näher dargestellten Ausführungsform ist vorgesehen, dass das Kraftspeicherelement 34 und das thermische Steilglied 41 beide an derselben Angriffsfläche am Ventilelement angreifen. In einem solchen Fall ist das Kraftspeicherelement bevorzugt als Zugkraftelement ausgebildet, welches gegen eine Stellbewegung des thermischen Stellgliedes arbeitet. Eine solche Anordnung kann sowohl zwischen einer Einlassöffnung und einer Auslassöffnung in einem Kammerabschnitt 56 als auch zwischen einer Einlassöffnung 14 und einem Verschluss 31 in einem Kammerabschnitt 58 vorgesehen sein.

In Figur 4 ist eine schematische Schnittdarstellung einer weiteren alternativen Ausführungsform eines thermostatischen Ventils 11 zu Figur 1 dargestellt. Bei dieser Ausführungsform ist in der Kammer 18 ein Kraftspeicherelement 34 vorgesehen, welches mit einem Ende an einem der Kammer 18 zugeordneten Verschluss 31 angreift und an einem gegenüberliegenden Ende auf ein thermisches Stellglied 41 wirkt, welches im Bereich eines zwischen der Einlassöffnung 14 und der Auslassöffnung 16 angeordneten Ventilsitzes 21 als Ventilelement 22 wirkt. Bei einer Temperaturerhöhung schließt das thermische Stellglied 41 die Durchlassöffnung 19 und liegt an dem Ventilsitz 21 an. Sobald sich die Temperatur der Kammer 18 wiederum abkühlt, überwiegt die Kraftwirkung des Kraftspeicherelementes 34, wodurch die Durchtrittsöffnung 19 geöffnet wird. Das thermische Stellglied 41 ist bei dieser Ausführungsform als glockenförmiges Federelement ausgebildet, welches beispielsweise in einer umlaufenden Nut in der Auslassöffnung 16 anordenbar ist.

Alternativ kann vorgesehen sein, dass das thermische Stellglied 41 gemäß der in Figur 4 dargestellten Ausführungsform auch in der Kammer 18 vorgesehen ist und das Kraftspeicherelement 34 auslassseitig angeordnet ist, um gegen das thermische Stellglied 41 zu wirken. Zusätzlich kann bei einem solchen thermischen Stellglied 41 ebenfalls eine vorspanneinrichtung 51 vorgesehen sein, um eine gewünschte Ventilöffnungskennlinie anzusteuern.

Auch bei den Ausführungsformen gemäß den Figuren 1 bis 3 kann eine Kombination des thermischen Stellgliedes 41 und dem Ventilelement 22 vorgesehen sein.

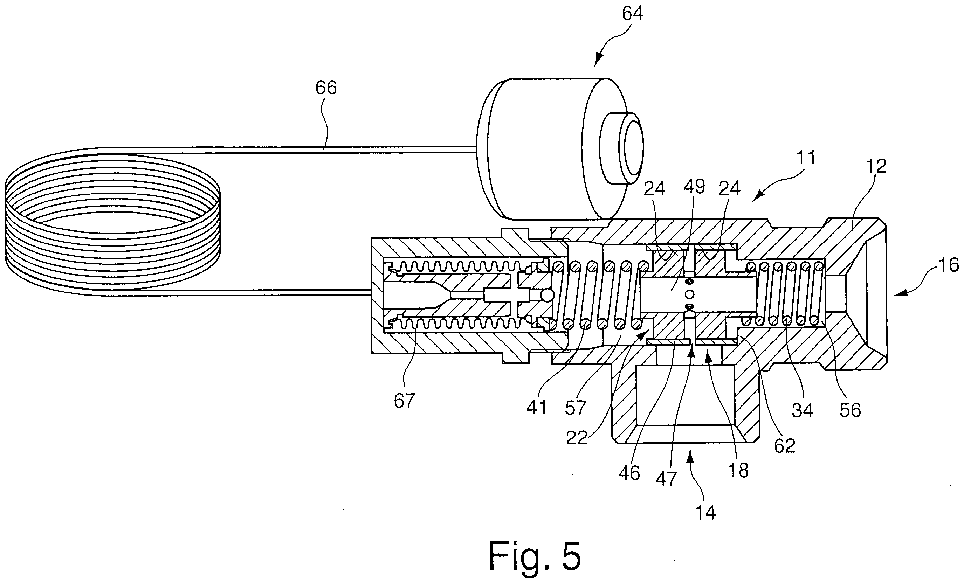

In Figur 5 ist eine alternative erfindungsgemäße Ausführungsform eines thermischen Ventils 11 zu Figur 2 dargestellt.

Anstelle des in Figur 2 vorgesehenen Verschlusses 31 ist ein Stellantrieb 61 vorgesehen, der gemäß dem Ausführungsbeispiel in Figur 5 als Fernverstellantrieb ausgebildet ist. Dieser Stellantrieb 61 umfasst einer Temperaturfühler 64, der an dem vorbestimmten Ort zur Erfassung einer Temperatur, insbesondere Raumtemperatur, positioniert ist. Dieser Temperaturfühler 64 ist über ein Kapillarrohr 66 mit einem Balgelement 67 verbunden, so dass die erfasste Temperaturänderung über die Flüssigkeitssäule im Kapillarrohr 66 eine Stellbewegung des Balgelementes 67 bewirkt.

Nach einer ersten Ausführungsform dieses Stellantriebes 61 ist das Balgelement 67 in einem Anschlussstück 68 vorgesehen, welches an einem Ende der Kammer 18 am Gehäuse 12 lösbar befestigt ist.

Durch einen solchen Stellantrieb 61 ist eine Voreinstellung der Vorspannkraft des thermischen Stellgliedes 41 über das Anschlussstück 68 ermöglicht. Die Anordnung des thermischen Stellgliedes 41 und des Kraftspeicherelementes 34 ist gegenüber der in Figur 2 vertauscht. Darüber hinaus ermöglicht ein solches Ventil, dass eine Ansteuerung nicht nur über die Temperatur des Massenstromes erfolgt, sondern zusätzlich durch einen frei zu bestimmenden Temperaturwert, insbesondere einer Umgebungs- oder Raumtemperatur an einer vorgegebenen Stelle. Dadurch wird die Flexibilität und Einsatz solcher thermostatischer Ventile 11 erhöht. Beispielsweise kann der Stellantrieb 61 derart eingestellt werden, dass das Ventil 11 bei einem Abfall einer Umgebungstemperatur unter einem bestimmten Sollwert die Vorspannung auf das thermische Stellglied 41 erniedrigt, so dass die Durchlassöffnung 19 geöffnet wird. Dieses thermische Ventil 11 weicht bezüglich der Ausgestaltung der Kammer 18 dahingehend ab, dass eine Hubbewegung des Ventilelementes 22 durch eine Schulter 62 begrenzt ist. Dies bedeutet, dass unabhängig einer Belastung durch das thermische Stellglied 41 die Verschiebebewegung des Ventilelementes 22 durch die Schulter 62 begrenzt ist.

Eine alternative Ausführungsform eines in Figur 5 dargestellten Stellantriebes 61 ermöglicht, dass die Anordnung des thermischen Stellgliedes 41 und des Kraftspeicherelementes gemäß Figur 2 beibehalten werden kann. Das Balgelement 67 ist an einem zum Kraftspeicherelement 34 weisenden Ende fest mit dem Anschlussstück 68 verbunden. Das Balgelement 67 wird von einer relativ zum Balgelement 67 bewegbaren Hülse umgeben, wobei zwischen dem feststehenden Ende des Balgelementes 67 und einem zum Kraftspeicherelement 34 weisenden Ende der Hülse eine Druckfeder vorgesehen ist. Das gegenüberliegende Ende der Hülse liegt an einem frei beweglichen Ende des Balgelementes 67 an. Bei einem Temperaturanstieg gibt der Temperaturfühler 64 beziehungsweise Temperaturweggeber ein Signal, wodurch das freie Ende des Balgelementes 67 bewegt wird und die Länge des Balgelementes 67 sich vergrößert. Dadurch wird die Hülse in die gleiche Richtung bewegt, das heißt, die Vorspannkraft auf das Kraftspeicherelement 34 wird reduziert. Somit kann das thermische Stellglied 41 gegen eine verringerte Kraft arbeiten und schließt die Durchlassöffnung 19. Sofern sich die Umgebungstemperatur erniedrigt, zieht sich das Balgelement 67 zusammen. Dadurch wirkt die zwischen dem feststehenden Ende des Balgelementes 67 und diesem zugeordneten Ende der Hülse angeordnete Druckfeder und erhöht die Vorspannkraft auf das Kraftspeicherelement 34, wodurch ein Öffnen der Durchlassöffnung 19 erfolgt.

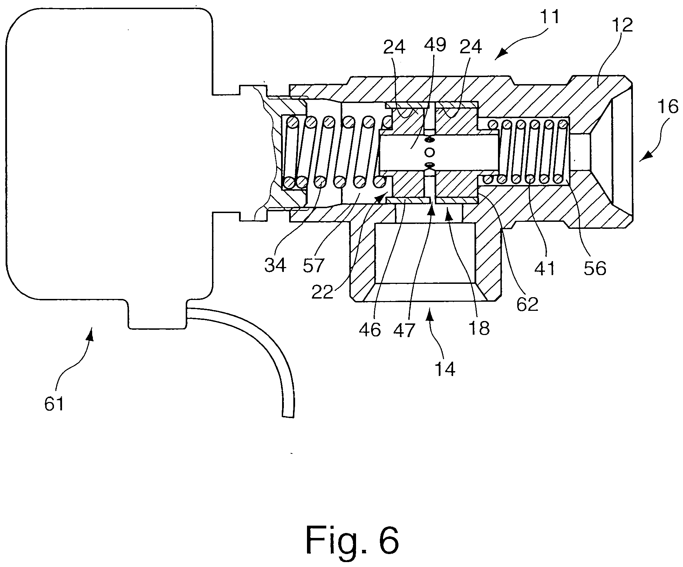

In Figur 6 ist eine weitere alternative Ausführungsform eines thermostatischen Ventils 11 zu Figur 5 dargestellt, welches einen als Thermostatventil ausgebildeten Stellantrieb 61 umfasst. Dieser Stellantrieb 61 kann elektronisch oder manuell einstellbar sein. In Abhängigkeit der Einstellung verändert sich die Vorspannkraft des Kraftspeicherelementes 34, da ein stirnseitiger Wandabschnitt relativ zur Kammer 18 verschiebbar ist, wodurch der Öffnungszeitpunkt der Durchlassöffnung 19 in Abhängigkeit der vorherrschenden Temperatur bestimmt wird. Soll das thermastatische Ventil 11 beispielsweise erst bei einer hohen Raumtemperatur öffnen, ist das Thermostatventil auf einer niederen Stufe eingestellt, welche eine hohe Vorspannkraft ausübt, das heißt, dass ein Wandabschnitt 32 in Richtung auf das Ventilelement 22 zu verschoben wird, wodurch die Vorspannkraft erhöht ist. Dadurch wird das Ventilelement 22 in einer offenen Position gehalten und der Massenstrom kann durchströmen. Das thermische Stellglied 41 arbeitet bei ansteigender Temperatur des Massenstromes gegen das Kraftspeicherelement 34 und schließt die Durchlassöffnung 19 bei einem hohen Temperaturwert des Massenstromes, um einen vorgegebenen Raumtemperaturwert zu erzielen.

Sofern das Thermostatventil auf eine hohe Raumtemperatur eingestellt ist, wird die Vorspannung auf das Kraftspeicherelement 34 erhöht. Dadurch wird das Ventilelement 22 länger in einer geöffneten Position gehalten, bis das thermische Stellglied 41 aufgrund der Temperaturerhöhung eine hinreichende Kraft aufgebaut hat, um gegen das Kraftspeicherelement 34 zu arbeiten und die Durchlassöffnung 19 zu schließen.

Alternativ zu dem Thermostatventil als Stellantrieb 61 können auch weitere elektrothermische Stellantriebe vorgesehen sein. Solche elektrothermischen Stellantriebe können beispielsweise Wachsdehnelemente oder Kraftspeicherelemente aus einer Formgedächtnislegierung umfassen.

Alle Merkmale sind für sich erfindungswesentlich und können beliebig miteinander kombinierbar sein.

## Patentansprüche

1. Thermostatisches Ventil zur Regelung eines Massenstromes in Abhängigkeit der Temperatur des Massenstromes mit einem Gehäuse (12), welches eine Einlassöffnung (14) und eine Auslassöffnung (16) aufweist, mit einer Durchlassöffnung (19, 47), welche die Einlassöffnung (14) und die Auslassöffnung (16) verbindet, mit einem an der Durchlassöffnung (19, 47) angeordneten Ventilsitz (21), welcher mit einem Ventilelement (22) verschließbar und in einer Kammer (18) zwischen der Einlassöffnung (14) und der Auslassöffnung (16) vorgesehen ist, wobei an dem Ventilelement (22) ein Kraftspeicherelement (34) angreift, welches in eine erste Bewegungsrichtung wirkt und das Ventilelement (22) in einer Ausgangsposition positioniert und dass an dem Ventilelement (22) zumindest ein thermisches Stellglied (41) aus einer Formgedächtnislegierung angreift, welches eine der ersten Bewegungsrichtung entgegengesetzte Wirkrichtung aufweist und temperaturabhängig eine Stellbewegung auf das Ventilelement (22) entgegen dem zumindest einen Kraftspeicherelement (34) bewirkt, sobald die Stellkraft des thermischen Stellgliedes (41) größer als die des Kraftspeicherelementes (34) ist, und wobei das Ventilelement (22), das zumindest eine Kraftspeicherelement (34) und das zumindest eine thermische Stellglied (41) in der Kammer (18) des Gehäuses (12) vorgesehen sind, **dadurch gekennzeichnet, dass** die Kammer (18) an einem Endabschnitt einen Verschluss (31) aufweist, der einen stirnseitigen Wandabschnitt (32) der Kammer (18) bildet und als Einstellschraube ausgebildet ist und dass durch eine axiale Verstellung der Einstellschraube eine axiale Verstellung des Ventilelementes (22) relativ zur Kammer (18) vorgesehen ist.

2. Thermostatisches Ventil nach Anspruch 1, **dadurch gekennzeichnet, dass** das thermische Stellglied (41) ab einem vorbestimmten Temperaturwert eine Stellbewegung erzeugt und das Ventilelement (22) betätigt und vorzugsweise als Federelement oder als membranartiges Element ausgebildet ist.

3. Thermostatisches Ventil nach einem der vorhergehenden Ansprüche, **dadurch gekennzeichnet, dass** das Ventilelement (22) zumindest eine Angriffsfläche (36) für das Kraftspeicherelement (34) und zumindest eine Angriffsfläche (42) für das thermische Stellglied (46) aufweist und die Angriffsflächen (36, 42) einander gegenüberliegend am Ventilelement (22) vorgesehen sind.

4. Thermostatisches Ventil nach einem der vorhergehenden Ansprüche, **dadurch gekennzeichnet, dass** das thermische Stellglied (41) in einem Kammerabschnitt (56, 57) der Kammer (18) vorgesehen ist, der in einer Schließstellung des Ventilelementes (22) mit dem durch die Einlassöffnung (14) zugeführten Massenstroms beaufschlagt ist oder der in einer Schließstellung des Ventilelementes (22) mit dem an der Auslassöffnung (16) anliegenden Massenstrom beaufschlagt ist.

5. Thermostatisches Ventil nach einem der Ansprüche 1 bis 3, **dadurch gekennzeichnet, dass** das thermische Stellglied (41) in einem Kammerabschnitt (56) der Kammer (18) angeordnet ist, welcher durch das Ventilelement (22) von dem weiteren mit Massenstrom durchströmbaren Kammerabschnitt (57) getrennt ist, und dass das thermische Stellglied (41) mit einer Umgebungstemperatur oder einen weiteren Massenstrom ansteuerbar ist.

6. Thermostatisches Ventil nach einem der vorhergehenden Ansprüche, **dadurch gekennzeichnet, dass** der Ventilsitz (21) an einem zur Kammer (18) weisenden Ende der Durchlassöffnung (19) vorgesehen ist und das Ventilelement (22) kegel-, kugel- oder tellerförmig als Sitzventil ausgebildet ist und dass vorzugsweise das sich in die Kammer (18) erstreckende Ventilelement (22) zumindest einen Führungsabschnitt (24) aufweist, der an einer als Führung ausgebildeten Kammerinnenwand (26) angreift und insbesondere an dem Führungsabschnitt (24) Strömungskanäle (28) ausgebildet sind.

7. Thermostatisches Ventil nach einem der Ansprüche 1 bis 5, **dadurch gekennzeichnet, dass** der Ventilsitz (21) durch zumindest eine Öffnung (47) in der Einlassöffnung (14) oder in einer Hülse (46) ausgebildet ist, wobei die Hülse (46) in die Kammer (18) einsetzbar ist und das Ventilelement (22) als Schiebeventil in der Kammer (18) oder in der Hülse (46) vorgesehen ist.

8. Thermostatisches Ventil nach Anspruch 7, **dadurch gekennzeichnet, dass** die zumindest eine Öffnung (47) der Hülse (46) einer Einlassöffnung (14) oder Auslassöffnung (16) am Gehäuse (12) zugeordnet ist.

9. Thermostatisches Ventil nach Anspruch 7, **dadurch gekennzeichnet, dass** das als Schiebeventil ausgebildete Ventilelement (22) zumindest eine als Führungsabschnitt (24) ausgebildete Ventilschließfläche aufweist, welche zumindest eine Öffnung (47) der Einlassöffnung (14) oder der Hülse (46) in einer Schließposition vollständig überdeckt.

10. Thermostatisches Ventil nach einem der vorhergehenden Ansprüche, **dadurch gekennzeichnet, dass** das Ventilelement (22) und das thermische Stellglied (41) als eine Baueinheit oder ein Bauteil ausgebildet sind.

11. Thermostatisches Ventil nach einem der vorhergehenden Ansprüche, **dadurch gekennzeichnet, dass** das zumindest eine Kraftspeicherelement (34) als Federelement ausgebildet ist.

12. Thermostatisches Ventil nach einem der vorhergehenden Ansprüche, **dadurch gekennzeichnet, dass** das Kraftspeicherelement (34) durch eine zwischen dem Ventilelement (22) und einem Wandabschnitt oder stirnseitigen Kammerwand (32, 37) der Kammer (18) wirkenden Vorspanneinrichtung (51) vorgespannt ist und dass die Vorspanneinrichtung (51) vorzugsweise eine Spannplatte (53) umfasst, welche an einem stirnseitigen Wandabschnitt (32) befestigt ist oder als Bügel oder Käfig ausgebildet ist, der an einem Ende an dem Ventilelement (22) angreift und am gegenüberliegenden Ende relativ verschiebbar an einem Wandabschnitt (32) oder einer Spannplatte (53) angreift oder als Anschlag ausgebildet ist, welcher die Hubbewegung des Ventilelements (22) in Richtung auf das thermische Stellglied (41) begrenzt.

13. Thermostatisches Ventil nach einem der vorhergehenden Ansprüche, **dadurch gekennzeichnet, dass** eine Öffnungs- oder Schließtemperatur für den Massenstrom durch den Verschluss (31) einstellbar ist.

14. Thermostatisches Ventil nach einem der Ansprüche 1 bis 12, **dadurch gekennzeichnet, dass** an einem Endabschnitt der Kammer (18) ein Stellantrieb (61) vorgesehen ist, durch den ein stirnseitiger Wandabschnitt (32) der Kammer (18) gebildet und das Kammervolumen der Kammer (18) veränderbar ist und vorzugsweise durch den Stellantrieb (61) eine Vorspannkraft des zumindest einen thermischen Stellgliedes (41) oder des zumindest einen Kraftspeicherelementes (34) veränderbar ist und insbesondere der Stellantrieb (61) als ein elektrothermischer Stellantrieb, beispielsweise mit einem Wachsdehnelement oder einem Stellglied aus einer Formgedächtnislegierung oder als ein Fernverstellantrieb oder Thermostatventil, ausgebildet ist.

## Claims

1. A thermostatic valve for regulating a mass flow depending on the temperature of said mass flow, having a housing (12) which has an inlet opening (14) and an outlet opening (16); a through-passage aperture (19, 47) which interconnects said inlet opening (14) and said outlet opening (16); a valve seat (21) arranged at the through-passage aperture (19, 47) may be closed with a valve member (22) and is provided within a chamber (18) between the inlet opening (14) and the outlet opening (16), the valve member (22) having an energy storing member (34) applied thereon which acts in a first direction of movement and positions the valve member (22) in an initial position, and the valve member (22) having at least one thermal actuator (41) made of a shape memory alloy applied thereon which has a direction of action that opposes said first direction of movement and, subject to temperature conditions, causes an actuating movement to be exerted on the valve member (22) that counteracts the at least one energy storing member (34) once the actuating force of the thermal actuator (41) exceeds that of the energy storing member (34), and the valve member (22), the at least one energy storing member (34), and the at least one thermal actuator (41) being provided within the chamber (18) of the housing (12), **characterised in that** the chamber (18) has a closure (31) at one end portion thereof which forms a frontal wall portion (32) of said chamber (18) and is realised in the form of a setting screw and **in that** an axial displacement of the setting screw is designed to result in an axial displacement of the valve member (22) with respect to the chamber (18).

2. The thermostatic valve as claimed in claim 1, **characterised in that** once a predetermined temperature value has been reached, the thermal actuator (41) creates an actuating movement and actuates the valve member (22) and is preferably realised as a spring element or a diaphragm-like element.

3. The thermostatic valve as claimed in any of the preceding claims, **characterised in that** the valve member (22) has at least one force application surface (36) for the energy storing member (34) and at least one force application surface (42) for the thermal actuator (46) and **in that** said force application surfaces (36, 42) are disposed on the valve member (22) so as to oppose each other.

4. The thermostatic valve as claimed in any of the preceding claims, **characterised in that** the thermal actuator (41) is provided in a chamber portion (56, 57) of the chamber (18) which is subject to the pressure applied by the mass flow supplied through the inlet opening (14) when the valve member (22) is in a closing position or which is subject to the pressure applied by the mass flow present at the outlet opening (16) when the valve member (22) is in a closing position.

5. The thermostatic valve as claimed in any one of claims 1 to 3, **characterised in that** the thermal actuator (41) is arranged in a chamber portion (56) of the chamber (18) which is separated, by the valve member (22), from the other chamber portion (57) which can be traversed by the mass flow and **in that** the thermal actuator (41) may be activated by an ambient temperature or by another mass flow.

6. The thermostatic valve as claimed in any of the preceding claims, **characterised in that** the valve seat (21) is provided at an end of the through-passage aperture (19) facing towards the chamber (18) and the valve member (22) is realised in the form of a conical, spherical or disk-shaped seat valve, and **in that** the valve member (22) extending into the chamber (18) preferably has at least one guide portion (24) which is applied to a chamber inner wall (26) formed as a guide, and **in that** in particular said guide portion (24) has flow channels (28) formed thereon.

7. The thermostatic valve as claimed in any one of claims 1 to 5, **characterised in that** the valve seat (21) is realised as at least one opening (47) formed in the inlet opening (14) or in a sleeve (46), said sleeve (46) being insertable into the chamber (18) and said valve member (22) being provided as a slide valve within the chamber (18) or within the sleeve (46).

8. The thermostatic valve as claimed in claim 7, **characterised in that** the at least one opening (47) of the sleeve (46) is associated with an inlet opening (14) or an outlet opening (16) on the housing (12).

9. The thermostatic valve as claimed in claim 7, **characterised in that** the valve member (22) which is realised as a slide valve has at least one valve closure surface, realised as a guide portion (24), which entirely closes at least one opening (47) of the inlet opening (14) or of the sleeve (46) when it is in a closing position.

10. The thermostatic valve as claimed in any of the preceding claims, **characterised in that** the valve member (22) and the thermal actuator (41) are realised as a modular unit or a component.

11. The thermostatic valve as claimed in any of the preceding claims, **characterised in that** the at least one energy storing member (34) is realised as a spring element.

12. The thermostatic valve as claimed in any of the preceding claims, **characterised in that** the energy storing member (34) is pre-loaded by a pre-tensioning device (51) acting between the valve member (22) and a wall portion or frontal chamber wall (32, 37) of the chamber (18) and **in that** said pre-tensioning device (51) preferably comprises a tensioning plate (53) fastened to a frontal wall portion (32) or is realised as a bracket or a cage which, at one end, is applied to the valve member (22) and, at an opposite end, is applied, in a manner allowing relative displacement, to a wall portion (32) or a tensioning plate (53), or is realised as a stop limiting the movement of travel of the valve member (22) in the direction towards the thermal actuator (41).

13. The thermostatic valve as claimed in any of the preceding claims, **characterised in that** an opening temperature or a closing temperature at which the mass flow is admitted or obstructed by the closure (31) is adjustable.

14. The thermostatic valve as claimed in any one of claims 1 to 12, **characterised in that** at one end portion of the chamber (18) an actuating drive (61) is provided, forming a frontal wall portion (32) of the chamber (18) and allowing the chamber volume of the chamber (18) to be varied, and **in that** preferably said actuating drive (61) makes it possible for a pre-tensioning force of the at least one thermal actuator (41) or of the at least one energy storing member (34) to be varied, and **in that** said actuating drive (61) is realised in particular as a thermo-electric actuating drive, including, for example, a wax element or an actuator made of a shape memory alloy, or as a remote adjustment actuating drive or a thermostatic radiator valve.

## Revendications

1. Soupape thermostatique destinée à réguler un flux massique en fonction de la température dudit flux massique, avec un boîtier (12) qui présente un orifice d'admission (14) et un orifice d'évacuation (16), avec un orifice de passage (19, 47) qui relie l'orifice d'admission (14) et l'orifice d'évacuation (16), avec un siège de soupape (21) qui est disposé au niveau de l'orifice de passage (19, 47) et qui est prévu dans une chambre (18) située entre l'orifice d'admission (14) et l'orifice d'évacuation (16) de manière à pourvoir être obturé par un élément de soupape (22), un élément accumulateur d'énergie (34) appuyant contre l'élément de soupape (22) et agissant dans un premier sens de déplacement, positionnant ainsi ledit élément de soupape (22) dans une position initiale, au moins un organe de réglage thermique (41) réalisé en un alliage à mémoire de forme appuyant contre l'élément de soupape (22) et présentant un sens d'action allant à l'opposé du premier sens de déplacement, provoquant ainsi, en fonction de la température, un mouvement de réglage au niveau dudit élément de soupape (22) qui va à l'opposé dudit au moins un élément accumulateur d'énergie (34), et ce dès que la force de réglage de l'organe de réglage thermique (41) est supérieure à celle de l'élément accumulateur d'énergie (34), et l'élément de soupape (22), ledit au moins un élément accumulateur d'énergie (34) ainsi que ledit au moins un organe de réglage thermique (41) étant prévus dans la chambre (18) du boîtier (12), **caractérisée en ce que** la chambre (18) présente, à une extrémité, un dispositif de fermeture (31) qui forme une partie de paroi frontale (32) de la chambre (18) et qui est réalisé en tant que vis de réglage, et **en ce qu'**un déplacement axial de la vis de réglage provoque un déplacement axiale de l'élément de soupape (22) par rapport à la chambre (18).

2. Soupape thermostatique selon la revendication 1, **caractérisée en ce que** l'organe de réglage thermique (41) déclenche un mouvement de réglage à partir d'une valeur de température prédéterminée et actionne l'élément de soupape (22) et **en ce qu'**il est réalisé de préférence en tant qu'élément ressort ou en tant qu'élément de type membrane.

3. Soupape thermostatique selon l'une quelconque des revendications précédentes, **caractérisée en ce que** l'élément de soupape (22) présente au moins une surface de prise (36) pour l'élément accumulateur d'énergie (34) et au moins une surface de prise (42) pour l'organe de réglage thermique (46), et **en ce que** les surfaces de prise (36, 42) sont prévues, en face l'une de l'autre, sur l'élément de soupape (22).

4. Soupape thermostatique selon l'une quelconque des revendications précédentes, **caractérisée en ce que** l'organe de réglage thermique (41) est prévu dans une partie de chambre (56, 57) de la chambre (18), à savoir dans celle qui est soumise au flux lorsque l'élément de soupape (22) se trouve dans une position fermée, ou dans celle qui est soumise au flux massique agissant au niveau de l'orifice d'évacuation (16) lorsque l'élément de soupape (22) se trouve dans une position fermée.

5. Soupape thermostatique selon l'une quelconque des revendications 1 à 3, **caractérisée en ce que** l'organe de réglage thermique (41) est disposé dans une partie de chambre (56) de la chambre (18), à savoir dans celle qui est séparée, par l'élément de soupape (22), de l'autre partie de chambre (57) qui, elle, peut être traversée par du flux massique, et **en ce que** l'organe de réglage thermique (41) peut être actionné par une température ambiante donnée ou par un autre flux massique.

6. Soupape thermostatique selon l'une quelconque des revendications précédentes, **caractérisée en ce que** le siège de soupape (21) est prévu à une extrémité de l'orifice de passage (19) qui est tournée vers la chambre (18) et que l'élément de soupape (22) est réalisé en tant que soupape à siège de forme conique, sphérique ou plate, et **en ce que** de préférence l'élément de soupape (22) qui s'étend dans la chambre (18) présente au moins une partie de guidage (24) qui est en contact avec une paroi de chambre intérieure (26) réalisée en tant que guide et que des canaux d'écoulement (28) sont formés en particulier sur la partie de guidage (24).

7. Soupape thermostatique selon l'une quelconque des revendications 1 à 5, **caractérisée en ce que** le siège de soupape (21) est formé par au moins une ouverture (47) située dans l'orifice d'admission (14) ou dans une douille (46), la douille (46) pouvant être mise en place dans la chambre (18) et l'élément de soupape (22) étant prévu en tant que soupape coulissante dans la chambre (18) ou dans la douille (46).

8. Soupape thermostatique selon la revendication 7, **caractérisée en ce que** ladite au moins une ouverture (47) de la douille (46) est affectée à un orifice d'admission (14) ou à un orifice d'évacuation (16) situé sur le boîtier (12).

9. Soupape thermostatique selon la revendication 7, **caractérisée en ce que** l'élément de soupape (22) réalisé en tant que soupape coulissante présente au moins une surface de fermeture de soupape qui est réalisée en tant que partie de guidage (24) et qui, dans une position fermée, recouvre complètement au moins une ouverture (47) de l'orifice d'admission (14) ou de la douille (46).

10. Soupape thermostatique selon l'une quelconque des revendications précédentes, **caractérisée en ce que** l'élément de soupape (22) et l'organe de réglage thermique (41) sont réalisés sous la forme d'un module ou d'un élément.

11. Soupape thermostatique selon l'une quelconque des revendications précédentes, **caractérisée en ce que** ledit au moins un élément accumulateur d'énergie (34) est réalisé en tant qu'élément ressort.

12. Soupape thermostatique selon l'une quelconque des revendications précédentes, **caractérisée en ce que** l'élément accumulateur d'énergie (34) est mis en précontrainte par un dispositif de précontrainte (51) agissant entre l'élément de soupape (22) et une partie de paroi ou une paroi de chambre frontale (32, 37) de la chambre (18), et **en ce que** le dispositif de précontrainte (51) comprend de préférence une plaque de serrage (53) fixée sur une partie de paroi frontale (32) ou qu'il est réalisé en tant qu'archet ou en tant que cage qui appuie, à une extrémité, contre l'élément soupape (22) et, à l'extrémité opposée, contre une partie de paroi (32) ou une plaque de serrage (53) de manière à pouvoir se déplacer relativement à celle-ci, ou qu'il est réalisé en tant que butée qui limite la course qu'effectue l'élément de soupape (22) en direction de l'organe de réglage thermique (41).

13. Soupape thermostatique selon l'une quelconque des revendications précédentes, **caractérisée en ce qu'**il est possible, au moyen du dispositif de fermeture (31), de régler une température d'ouverture ou de fermeture pour le flux massique.

14. Soupape thermostatique selon l'une quelconque des revendications 1 à 12, **caractérisée en ce qu'**à une extrémité de la chambre (18) est prévu un organe moteur (61) qui forme une partie de chambre frontale (32) de la chambre (18) et qui permet de modifier le volume de la chambre (18), et **en ce que** de préférence l'organe moteur (61) permet de modifier une force de précontrainte dudit au moins un organe de réglage thermique (41) ou dudit au moins un élément accumulateur d'énergie (34), et **en ce qu'**en particulier l'organe moteur (61) est réalisé sous la forme d'un organe moteur électrothermique, par exemple avec un élément extensible à base de cire ou avec un organe de réglage constitué en un alliage à mémoire de forme, ou sous la forme d'un organe de régulation à distance ou soupape thermostatique.
